# FASCICULE DE BREVET EUROPEEN

(11) **EP 2 310 286 B1**
(45) Date de publication et mention de la délivrance du brevet: **26.09.2012**
(21) Numéro de dépôt: 09784491.4
(22) Date de dépôt: 09.07.2009
(51) Int. Cl.: B65D 41/04, B65D 51/16, B29C 45/26

(54) **BOUCHON POUR UN COL DE RECIPIENT ET MACHINE DE MOULAGE D'UNE MATIERE PLASTIQUE POUR FABRIQUER UN TEL BOUCHON**
VERSCHLUSS FÜR EINEN BEHÄLTERHALS UND MASCHINE ZUM FORMEN EINES KUNSTSTOFFES ZUR HERSTELLUNG SOLCH EINES VERSCHLUSSES
STOPPER FOR A CONTAINER NECK AND MACHINE FOR MOULDING A PLASTIC IN ORDER TO MANUFACTURE SUCH A STOPPER

(30) Priorité: 11.07.2008 FR 0854766
(43) Date de publication de la demande: 20.04.2011
(73) Titulaire: Tetra Laval Holdings & Finance S.A., Pully (CH)
(72) Inventeur: GRAUX, Stéphane, 69400 Liergues (FR); BERNARD, Véronique, 69480 Anse (FR); LUZZATO, Michel, 69130 Ecully (FR)
(74) Mandataire: Grand, Guillaume
(86) Numéro de dépôt international: PCT/FR2009/051360
(87) Numéro de publication internationale: WO 2010/004213

(56) Documents cités:
- EP-A- 1 657 177
- EP-A- 1 666 370
- DE-A1- 19 613 830
- US-A- 6 021 912

## Description

La présente invention concerne un bouchon pour un col de récipient, ainsi qu'une machine de moulage d'une matière plastique pour fabriquer un tel bouchon.

L'invention s'intéresse plus particulièrement aux bouchons qui, lorsque leur jupe externe est fixée autour d'un col de récipient, notamment par vissage, obturent de manière étanche ce col, tout en permettant l'évacuation automatique d'une éventuelle surpression régnant à l'intérieur du récipient. Ces bouchons présentent un réel intérêt si ces derniers sont utilisés pour boucher des récipients contenant des liquides susceptibles de fermenter lorsqu'ils sont conservés trop longtemps, dans de mauvaises conditions et/ou s'ils sont contaminés, après la première ouverture, par un consommateur qui boit au goulot par exemple. De tels liquides sont, par exemple, le lait, les jus de fruits, des solutions de café au lait, des solutions à base de thé, etc. Les risques que les récipients ou les bouchons se rompent soudainement sous l'effet de la surpression, ainsi que les risques que l'utilisateur se retrouve aspergé de liquide, voire blessé par le bouchon lors de l'ouverture du récipient, sont ainsi évités.

EP-A-1 666 370, US-A-6 021 912 et EP-A-1 657 177 proposent, à cet effet, des bouchons munis intérieurement d'une lèvre d'étanchéité annulaire, qui s'étend à l'intérieur de leur jupe externe, en saillie depuis la face interne d'une paroi de fond du bouchon, et qui vient s'appuyer de manière étanche à l'intérieur d'un col de récipient lorsque ce dernier est fermé par le bouchon. Lorsque la pression régnant à l'intérieur du récipient dépasse une valeur seuil prédéterminée, cette lèvre d'étanchéité est localement écartée du col de récipient pour rompre leur contact étanche, sous l'action d'une ou de plusieurs fines nervures, qui relisent un point de la périphérie intérieure de la lèvre à la face interne de la paroi de fond et qui courent en longueur sur cette face interne suivant une direction radiale à l'axe central de la lèvre. Cette ou ces nervures radiales permettent en effet de transmettre localement à la lèvre d'étanchéité une partie du mouvement de bombement vers l'extérieur que subit la paroi de fond, par rapport à sa jupe externe qui est reliée fixement au col de récipient, ce bombement résultant de la surpression dans le récipient. En revanche, la présence de cette ou ces nervures pose de réels problèmes de fabrication et d'utilisation, ce qui pourrait d'ailleurs expliquer l'absence sur le marché de bouchons conformes aux enseignements des deux documents précités. En effet, de par la géométrie de chaque nervure, chaque bord latéral de la nervure est relié à la paroi de fond du bouchon par une zone anguleuse à 90°. Ces deux zones anguleuses son t à la fois difficiles à mouler, ce qui oblige à disposer d'une machine de moulage complexe et onéreuse, difficiles à démouler, et difficiles à nettoyer après démoulage, ce qui complique significativement la stérilisation du bouchon avant sa mise en place sur un col de récipient. En outre, en service, le comportement mécanique de la ou des nervures est peu satisfaisant. D'une part, en raison de sa finesse, c'est-à-dire de sa faible dimension suivant une direction périphérique à l'axe central du bouchon, l'extrémité de chaque nervure liée à la lèvre d'étanchéité tend, lors de la mise en place du bouchon autour d'un col de récipient, à légèrement fléchir, si bien que, en cas de surpression ultérieure à l'intérieur du récipient, le début du bombement de la paroi de plafond ne sert pas à entraîner localement la lèvre d'étanchéité mais à corriger la flexion de la nervure. D'autre part, en l'absence de surpression à l'intérieur du récipient, les caractéristiques de l'étanchéité fournie par la lèvre présentent une brusque discontinuité au niveau périphérique de la ou chaque nervure, ce qui limite les performances globales du bouchon en ce qui concerne son étanchéité.

Le but de la présente invention est de proposer un bouchon dont la fonction d'évacuation de surpression est à la fois fiable et facile à réaliser.

A cet effet, l'invention a pour objet un bouchon pour un col d'un récipient, tel que défini à la revendication 1.

L'idée à la base de l'invention est d'abattre les zones anguleuses aiguës ou à 90° entre le relief saillant et, à la fois, la fa ce interne de la paroi de fond et la face intérieure de la jupe d'étanchéité. Pour ce faire, l'invention cherche à conformer ce relief saillant à la façon d'un pan coupé, ce qui facilite alors grandement le moulage du bouchon, son démoulage et sa stérilisation. Ces avantages compensent sans conteste la quantité de matière nécessaire pour occuper tout l'espace délimité entre la paroi de fond, la lèvre d'étanchéité et ce pan coupé. D'ailleurs, la présence de cette quantité de matière limite les risques de déformation, notamment de fléchissement, du relief saignant lors de la mise en place du bouchon autour d'un col de récipient, de sorte que, lorsque ce relief est sollicité en cas de surpression à l'intérieur du récipient, son comportement est fiable, en permettant l'évacuation de cette surpression dès que la pression régnant à l'intérieur du récipient atteint une valeur prédéterminée précise. En outre, de par la définition géométrique du relief saillant conforme à l'invention, l'intersection entre le plan géométrique définissant ce relief et la face intérieure de la lèvre d'étanchéité forme une ligne courbe s'étendant sur une portion périphérique de la jupe non négligeable, en tout cas nettement supérieure à celle associée à une nervure fine du type de celles proposées dans EP-A-1 666 370, US-A-6021 912 et EP-A-1 657 177. De cette façon, les caractéristiques relatives à l'étanchéité fournie par la lèvre présentent une bonne régularité suivant toute la périphérie de la lèvre, sans discontinuité brutale au niveau du relief saillant.

Des caractéristiques avantageuses du bouchon conforme à l'invention, prises isolément ou selon toutes les combinaisons techniquement possibles, sont spécifiées aux revendications dépendantes 2 à 8.

L'invention a également pour objet une machine de moulage d'une matière plastique pour fabriquer un bouchon pour un col de récipient, telle que définie à la revendication 9.

La machine conforme à l'invention permet de fabriquer un bouchon tel que défini plus haut. En pratique, le pan coupé de la machine conforme à l'invention est réalisé par usinage, notamment par meulage, de l'extrémité d'un noyau interne d'une machine de moulage préexistante. On comprend ainsi l'intérêt pratique et économique de la machine conforme à l'invention.

Une caractéristique avantageuse de la machine de moulage conforme à l'invention est spécifiée à la revendication 10.

L'invention sera mieux comprise à la lecture de la description qui va suivre, donnée uniquement à titre d'exemple et faite en se référant aux dessins sur lesquels :
- la figure 1 est une coupe longitudinale d'un bouchon conforme à l'invention ;
- la figure 2 est une vue selon la flèche II de la figure 1, le plan de coupe de la figure 1 étant marqué par la ligne I-I sur la figure 2 ;
- la figure 3 est une vue en perspective du bouchon, selon une direction d'observation correspondant globalement à la flèche III de la figure 1 ;
- les figures 4 et 5 sont des vues analogues à la figure 1, illustrant le bouchon assemblé à un col d'un récipient, respectivement en l'absence et en présence d'une surpression à l'intérieur de ce récipient ; et
- la figure 6 est une coupe longitudinale schématique d'une machine de moulage conforme à l'invention.

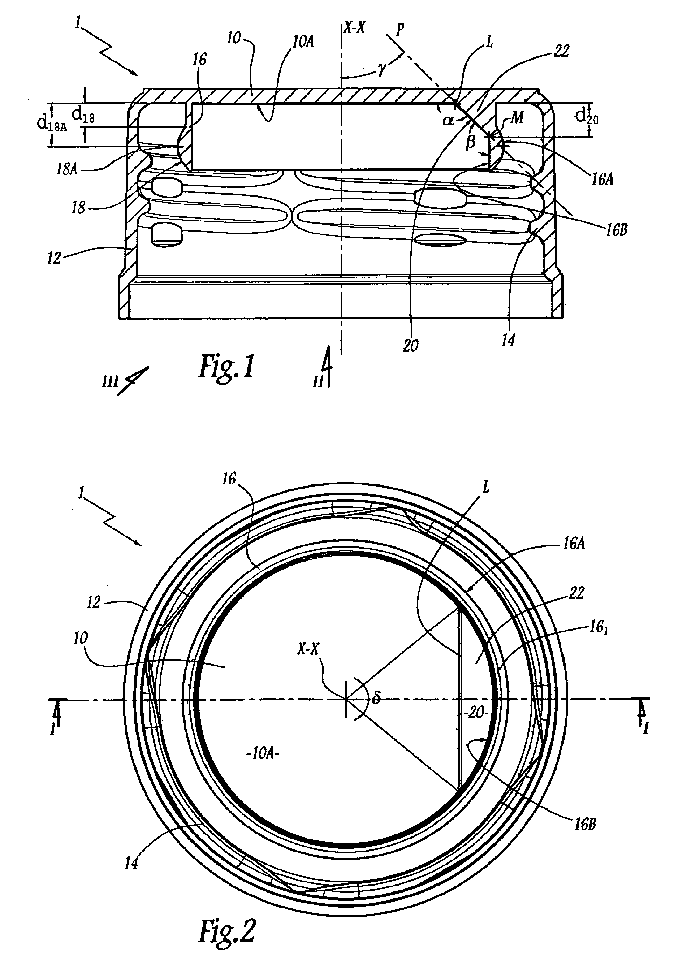

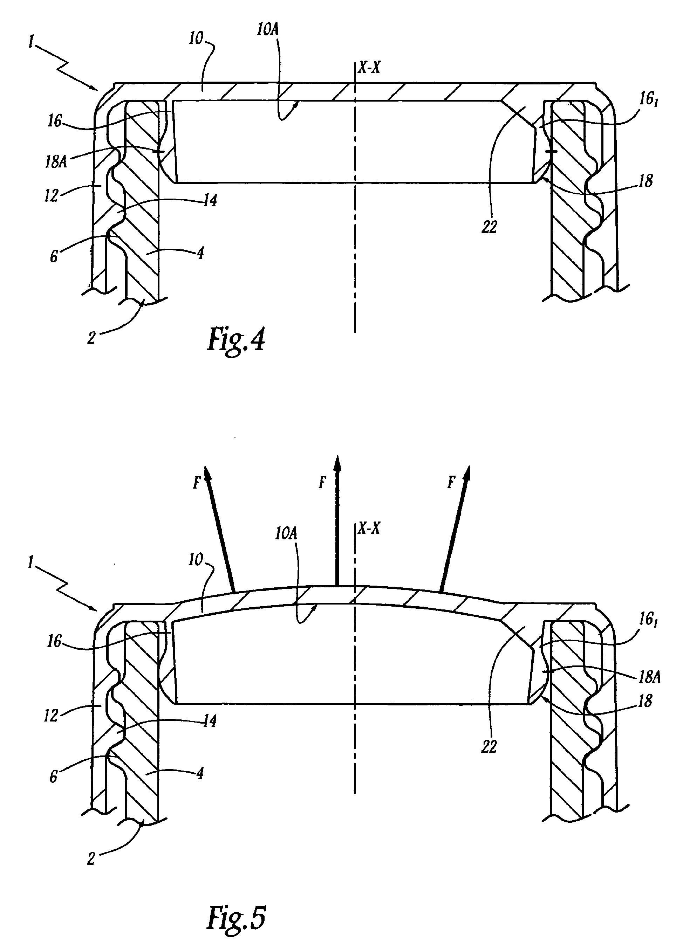

Sur les figures 1 à 3 est représenté un bouchon 1 qui, comme montré sur les figures 4 et 5, est adapté pour être fixé sur un col 2 d'un récipient. En pratique, le col 2 est soit venu de matière avec le reste du récipient, notamment lorsque ce dernier est une bouteille en verre ou en matière plastique, soit adapté pour être solidarisé à demeure sur une paroi du récipient, au niveau d'une ouverture traversant cette paroi.

Le bouchon 1 et le col 2 présentent des formes respectives globalement tubulaires, dont les axes longitudinaux centraux sont sensiblement confondus, sous la référence X-X, lorsque le bouchon est fixé sur le col. On considère ici que le terme « intérieur » qualifie une zone du bouchon ou du col tournée vers l'axe X-X, suivant une direction globalement radiale à cet axe, tandis que le terme « extérieur » qualifie une zone du bouchon ou du col tournée dans une direction de sens opposé.

Le col 2 comporte un corps 4 globalement cylindrique à base circulaire, d'axe X-X. Sur la face extérieure de ce corps, le col comporte un filetage saillant 6.

Le bouchon 1 est ouvert à son extrémité axiale tournée vers le récipient, tandis qu'il est fermé, à son extrémité axiale opposée, par une paroi de fond 10 globalement discoïdale, centrée sur l'axe X-X. Une jupe tubulaire 12, centrée sur l'axe X-X, s'étend axialement en direction du récipient depuis la périphérie extérieure de la paroi de fond 10. Cette jupe 12 est munie, sur sa face intérieure, d'un filetage saillant 14 complémentaire du filetage 6, de manière à permettre le vissage et le dévissage de la jupe 12 autour de la face extérieure du corps 4.

Le bouchon 1 comporte également une lèvre annulaire 16, également centrée sur l'axe X-X et couramment appelée « lèvre olive ». Cette lèvre 16 s'étend axialement en direction du récipient depuis la paroi de fond 10, à l'intérieur de la jupe externe 12. Lorsque le bouchon est vissé sur le col 2 comme sur les figures 4 et 5, la paroi de fond 10 s'étend en travers de ce col, tandis que la jupe 12 entoure extérieurement le corps 4 et, sauf en cas de surpression comme expliqué plus loin, la lèvre 16 est, sur toute sa périphérie extérieure, appuyée de manière étanche contre la face intérieure de ce corps 4. A cet effet, la lèvre 16 comporte, à son extrémité axiale opposée à la paroi de fond 10, un renflement radialement saillant vers l'extérieur, qui délimite, sur toute la périphérie de la face extérieure 16A de la lèvre, une surface convexe 18. Cette surface convexe 18 inclut une ligne de sommet 18A qui s'étend sur toute la périphérie extérieure de la lèvre 16, en étant située radialement le plus loin de l'axe X-X que le reste de la surface 18. Lorsque le bouchon 1 est fixé au col 2, cette ligne de sommet 18A forme, par contact contre la face intérieure du corps 4, une ligne d'étanchéité.

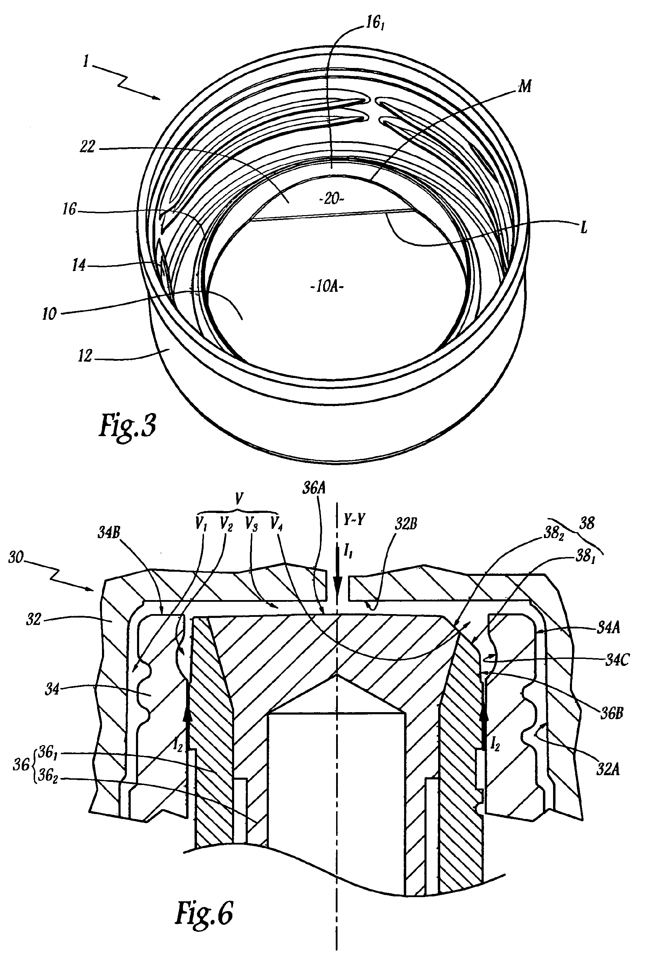

La face intérieure 16B, ici cylindrique à base circulaire centrée sur l'axe X-X, de la lèvre 16 est reliée à la face interne 10A de la paroi de fond 10, c'est-à-dire à la face plane de cette paroi de fond dirigée vers l'intérieur de la jupe 12 et perpendiculaire à l'axe X-X, par une zone anguleuse à angle droit, suivant toute la périphérie intérieure de la lèvre, excepté dans une portion périphérique 16₁ de la lèvre 16, comme bien visible sur les figures 2 et 3. En effet, au niveau périphérique de cette portion 16₁, la zone anguleuse précitée est abattue par un pan coupé, c'est-à-dire par une surface plane 20 appartenant à un plan géométrique P (figure 1) incliné par rapport à l'axe X-X, et qui, à la fois, passe par la portion de lèvre 16₁ et coupe la face 10A suivant une ligne droite L orthoradiale à l'axe X-X. La totalité de l'espace délimité conjointement par le plan P, la face 10A et la face 16B au niveau de la portion de lèvre 16₁ est occupée par de la matière du bouchon 1 et forme ainsi un relief 22 en saillie vers l'intérieur du bouchon, qui relie l'une à l'autre la paroi de fond 10 et la face intérieure de la portion de lèvre 16₁. Autrement dit, lorsqu'on observe le bouchon 1 par l'intérieur comme sur les figures 2 et 3, ce relief saillant 22 présente une unique face visible, à savoir la surface plane 20 qui est reliée exclusivement, d'une part, à la face 10A le long de la ligne L, par une zone angulaire obtus α (figure 1), et, d'autre part, à la face 16B le long d'une ligne courbe M, par une zone angulaire obtus β (figure 1).

En cas de surpression à l'intérieur du récipient lorsque son col 2 est fermé par le bouchon 1, c'est-à-dire lorsque la pression interne à ce récipient dépasse une valeur seuil prédéterminée, cette surpression bombe la paroi de fond 10, comme indiqué par les flèches F sur la figure 5, tandis que la jupe 12 demeure immobile eu égard à sa fixation au corps 4 du col 2. Ce mouvement de bombement est transmis de la paroi de fond 10 à la portion de lèvre 16₁ par le relief saillant 22, de sorte que cette portion de lèvre se trouve déplacée radialement vers l'intérieur, jusqu'à rompre le contact étanche entre la surface 18 et la face intérieure du corps 4, comme bien visible dans la partie droite de la figure 5. L'étanchéité fournie par la ligne 18A est alors rompue au niveau périphérique de la portion de lèvre 16₁, ce qui permet l'évacuation de la surpression à l'extérieur du col 2. A titre d'exemple, la valeur de pression seuil précitée est comprise entre 2 et 8 bars pour des récipients courants du commerce, contenant des liquides alimentaires susceptibles de fermenter.

A titre de formes de réalisation pratiques, des dimensionnements avantageux relatifs au relief 22 sont spécifiés ci-après, étant entendu que ces dimensionnements peuvent être considérés isolément ou en combinaison partielle ou totale :
- Afin notamment afin de garantir une bonne transmission de mouvement entre la paroi de fond 10 et la portion de lèvre 16₁, l'angle γ formé, dans un plan de coupe longitudinale du bouchon 1 perpendiculaire à la ligne L, entre le plan P et l'axe X-X est compris entre 30 et 60°, de préférence égal à 45° ± 5°, comme montré sur la figure 1.
- Afin notamment d'éviter une discontinuité brutale du comportement de la lèvre 16 relatif à l'étanchéité vis-à-vis du col 2, la portion de lèvre 16₁ court sur un angle δ centré sur l'axe X-X, que l'on peut définir plus précisément comme étant le secteur angulaire délimité par les deux points de contact entre la ligne droite L et la ligne courbe M, présentant une valeur supérieure à 30°, de préférence égale à 80° ± 5°, comme montré sur la fi gure 2.
- Afin notamment de fiabiliser le comportement du relief 22 pour que ce dernier provoque la rupture de la ligne d'étanchéité 18A par entraînement de la portion de lèvre 16₁ au niveau de sa surface d'étanchéité 18, la dimension axiale maximale d₂₀ de la surface 20, qui correspond à la distance axiale maximale entre la face 10A et la ligne M, est supérieure à la distance axiale d₁₈ entre la face 10A et l'extrémité de la surface 18, tournée vers cette face 10A, comme indiqué sur la figure 1.
- Afin notamment de limiter la quantité de matière constituant le relief 22 sans en compromettre la fiabilité, en particulier afin de limiter les risques de retassure de cette matière au niveau périphérique de la portion de lèvre 16₁, la distance précitée d₂₀ est inférieure à la distance axiale d_{18A} entre la face 10A et la ligne de sommet 18A, comme indiqué sur la figure 1.

Pour fabriquer le bouchon 1, on moule une matière plastique semi-rigide, telle que du polypropylène ou du polyéthylène. Ce moulage est prévu pour former, d'un seul tenant, la paroi de fond 10, la jupe 12, la lèvre 16 et le relief 22.

En pratique, à titre d'exemple, on utilise la machine de moulage 30 représentée sur la figure 6. Cette machine comporte un moule externe creux 32, dont la cavité interne présente une forme cylindrique à base circulaire, centrée sur un axe longitudinal Y-Y qui, à l'issue du moulage du bouchon 1, correspond à l'axe X-X. La machine 30 comporte également deux noyaux tubulaires coaxiaux et disposés l'un dans l'autre, à savoir un noyau externe 34 et un noyau interne 36.

En service, les noyaux 34 et 36 sont agencés à l'intérieur de la cavité de moulage du moule 32, en étant centrés sur l'axe Y-Y, comme représenté sur la figure 6. Dans cette configuration d'utilisation de la machine 30, le moule 32 et les noyaux 34 et 36 délimitent entre eux un volume V de réception d'une matière plastique, cette dernière étant injectée dans le volume V en une ou plusieurs zones. Ici, la matière plastique est injectée, à la fois, à travers la région du moule 32 traversée par l'axe Y-Y, comme indiqué par la flèche I₁, et radialement entre les noyaux 34 et 36, comme indiqué par les flèches I₂. Les faces du moule 32 et des noyaux 34 et 36, qui délimitent ce volume V, sont conformées pour mouler le bouchon 1. Ainsi, la face latérale intérieure 32A du moule 32 et la face latérale extérieure 34A du noyau 34 délimitent entre elles, suivant une direction radiale à l'axe Y-Y, un premier sous-volume V₁ du volume V, pour mouler la jupe 12. La face axiale interne 32B du moule 32 et les faces axiales 348 et 36A des noyaux 34 et 36 délimitent entre elles, suivant la direction de l'axe Y-Y, un deuxième sous-volume V₂, pour mouler la paroi de fond 10. La face latérale intérieure 34C du noyau 34 et la face latérale extérieure 36B du noyau 36 délimitent radialement entre elles un troisième sous-volume V₃ du volume V, pour mouler la lèvre 16.

Pour mouler le relief 22, le volume V inclut en outre un quatrième sous-volume V₄ occupant tout l'espace délimité entre à la fois le sous-volume V₂ non inclus, une portion périphérique du sous-volume V₃ non incluse et un pan coupé 38 reliant la face axiale 36A et la face latérale extérieure 36B du noyau interne 36. Ce pan coupé 38 appartient à un plan géométrique correspondant au plan P à la fin du moulage du bouchon 1 par la machine 30. Autrement dit, ce plan géométrique coupe la face axiale 36A suivant une ligne droite orthoradiale à l'axe Y-Y et coupe la face latérale extérieure 36B suivant une ligne courbe qui intersecte la ligne droite précitée en deux points définissant entre eux, suivant une direction périphérique à l'axe Y-Y, la portion du sous-volume V₃ au niveau de laquelle se situe le sous-volume V₄.

Avantageusement, le noyau interne 36 comporte, coaxialement à l'intérieur d'un corps principal de moulage 36₁, un poussoir de démoulage 36₂. Ce poussoir 36₂ est adapté pour, après injection de la matière plastique, être entraîné en translation suivant l'axe Y-Y par rapport au corps 36₁, permettant ainsi, après avoir préalablement dégagé le moule 32, de démouler le bouchon 1 vis-à-vis du noyau 34 et du corps 36₁. Dans ces conditions, le pan coupé 38 est délimité conjointement par le corps 36₁ et le poussoir 36₂, en étant constitué de deux surfaces élémentaires 38₁ et 38₂ appartenant respectivement à ce corps et à ce poussoir.

Divers aménagements et variantes au bouchon 1 et à la machine 30 sont par ailleurs envisageables. A titre d'exemples :
- d'autres dimensionnements que ceux spécifiés ci-dessus sont possibles pour la distance précitée d₂₀, notamment selon la géométrie spécifique de la zone extérieure de la lèvre 16 destinée à venir s'appuyer en contact étanche contre le col de récipient ; en pratique, eu égard aux géométries de lèvres d'étanchéité que l'on rencontre le plus fréquemment sur le marché, par exemple les lèvres-olives, les lèvres-arcs, etc, un dimensionnement « passe-partout » de cette distance d₂₀ consiste à prévoir qu'elle est sensiblement égale à la moitié de la dimension axiale de la lèvre d'étanchéité 16, c'est-à-dire de la distance axiale séparant la face interne 10A de la paroi de fond 10 et l'extrémité de la lèvre, opposée à cette paroi de fond ; et/ou
- d'autres formes de réalisation que les filetages 6 et 14 sont possibles en ce qui concerne la fixation amovible entre la jupe 12 et le col de récipient 2.

## Revendications

1. Bouchon (1) pour un col (2) d'un récipient, comportant :
- une jupe (12) sensiblement tubulaire, centrée sur un axe longitudinal (X-X) et adaptée pour être fixée autour du col,
- une paroi de fond (10), obturant l'une des extrémités longitudinales de la jupe et s'étendant de manière sensiblement perpendiculaire à l'axe,
- une lèvre d'étanchéité (16) sensiblement annulaire, centrée sur l'axe et s'étendant à l'intérieur de la jupe depuis la face interne (10A) de la paroi de fond, et
- un relief saillant (22), qui relie la face interne (10A) de la paroi de fond (10) et la face intérieure (16B) d'une portion périphérique (16₁) de la lèvre (16) et qui est adapté pour transmettre à la lèvre un mouvement de la paroi de fond (10) par rapport à la jupe (12) de telle sorte que ladite portion (16₁) de la lèvre est déplacée radialement vers l'axe (X-X) lorsque la pression à l'intérieur de la jupe est supérieure à une valeur seuil prédéterminée,
**caractérisé en ce que** le relief saillant (22) occupe tout l'espace délimité conjointement par la face interne (10A) de la paroi de fond (10), par la face intérieure (16B) de ladite portion (16₁) de la lèvre (16) et par un plan géométrique (P) qui passe par ladite portion de la lèvre et qui coupe la face interne de la paroi de fond suivant une ligne droite (L) orthoradiale à l'axe (X-X).

2. Bouchon suivant la revendication 1, **caractérisé en ce que**, dans un plan de coupe longitudinale de la jupe (12) perpendiculaire à ladite ligne droite (L), ledit plan géométrique (P) et l'axe (X-X) forment un angle (γ) compris entre 30 et 60°.

3. Bouchon suivant la revendication 2, **caractérisé en ce que** ledit angle (γ) est égal à 45° environ.

4. Bouchon suivant l'une quelconque des revendications précédentes, **caractérisé en ce que** ladite portion (16₁) de la lèvre (16) court sur plus de 30° autour de l'axe (X-X).

5. Bouchon suivant la revendication 4, **caractérisé en ce que** ladite portion (16₁) de la lèvre (16) court sur environ 80° autour de l'axe (X-X).

6. Bouchon suivant l'une quelconque des revendications précédentes, **caractérisé en ce que** la lèvre (16) délimite, sur toute la périphérie de sa face extérieure (16A), une surface convexe (18) qui est adaptée pour s'appuyer de manière étanche contre le col de récipient (2),
et **en ce que** la distance axiale maximale (d₂₀), entre la face interne (10A) de la paroi de fond (10) et la ligne (M) d'intersection entre ledit plan géométrique (P) et la face intérieure (16B) de ladite portion (16₁) de la lèvre (16), est supérieure à la distance axiale (d₁₈) entre la face interne (10A) de la paroi de fond (10) et l'extrémité de la surface convexe (18), tournée vers la paroi de fond.

7. Bouchon suivant l'une quelconque des revendications précédentes, **caractérisé en ce que** la lèvre (16) délimite, sur toute la périphérie de sa face extérieure (16A), une surface convexe (18), qui inclut une ligne de sommet périphérique (18A) située radialement plus loin de l'axe (X-X) que le reste de la surface convexe et qui est adaptée pour s'appuyer de manière étanche contre le col de récipient (2) le long de cette ligne de sommet,
et **en ce que** la distance axiale maximale (d₂₀), entre la face interne (10A) de la paroi de fond (10) et la ligne (M) d'intersection entre ledit plan géométrique (P) et la face intérieure (16B) de ladite portion (16₁) de la lèvre (16), est inférieure à la distance axiale (d_{18A}) entre la face interne (10A) de la paroi de fond (10) et la ligne de sommet (18A).

8. Bouchon suivant l'une quelconque des revendications précédentes, **caractérisé en ce que** la distance axiale maximale (d₂₀), entre la face interne (10A) de la paroi de fond (10) et la ligne (M) d'intersection entre ledit plan géométrique (P) et la face intérieure (16B) de ladite portion (16₁) de la lèvre (16), est égale à environ la moitié de la dimension axiale de la lèvre (16).

9. Machine (30) de moulage d'une matière plastique pour fabriquer un bouchon (1) pour un col de récipient (2), comportant un moule creux (32), centré sur un axe (Y-Y), et deux noyaux tubulaires coaxiaux (34, 36), disposés l'un dans l'autre et agencés coaxialement à l'intérieur du moule de manière à délimiter un volume (V) de réception de la matière plastique, ce volume incluant :
- un premier sous-volume (V₁) délimité radialement entre une face latérale intérieure (32A) du moule (32) et une face latérale extérieure (34A) du noyau externe (34), ce premier sous-volume étant adapté pour mouler une jupe (12) du bouchon (1), sensiblement tubulaire, centrée sur l'axe et adaptée pour être fixée autour d'un col de récipient (2),
- un deuxième sous-volume (V₂) délimité axialement entre une face axiale interne (32B) du moule (32) et des faces axiales respectives (34B, 36A) des noyaux externe (34) et interne (36), ce deuxième sous-volume étant adapté pour mouler une paroi de fond (10) du bouchon, obturant l'une des extrémités longitudinales de la jupe (12) et s'étendant de manière sensiblement perpendiculaire à l'axe,
- un troisième sous-volume (V₃) délimité radialement entre une face latérale intérieure (34C) du noyau externe (34) et une face latérale extérieure (36B) du noyau interne (36), ce troisième sous-volume étant adapté pour mouler une lèvre d'étanchéité annulaire (16) du bouchon, centrée sur l'axe et s'étendant à l'intérieur de cette jupe depuis la face interne (10A) de la paroi de fond (10), **caractérisée en ce que** le volume (V) de réception de la matière plastique inclut en outre un quatrième sous-volume (V₄) occupant tout l'espace délimité entre, à la fois, le deuxième sous-volume (V₂) non inclus, une portion périphérique du troisième sous-volume (V₃) non incluse et un pan coupé (38), qui relie la face axiale (36A) et la face latérale extérieure (36B) du noyau interne (36) et qui appartient à un plan géométrique qui coupe cette face axiale suivant une ligne droite orthoradiale à l'axe (Y-Y), ce quatrième sous-volume étant adapté pour mouler un relief saillant (22) du bouchon (1).

10. Machine suivant la revendication 9, **caractérisée en ce que** le noyau interne (36) comprend un corps principal de moulage (36₁) et un poussoir de démoulage (36₂) agencé de manière mobile suivant l'axe (Y-Y) à l'intérieur du corps principal, le pan coupé (38) incluant deux surfaces (38₁, 38₂) délimitées respectivement par ce corps principal et ce poussoir.

## Claims

1. A stopper (1) for a neck (2) of a container, said stopper comprising:
• a substantially tubular skirt (12) centered on a longitudinal axis (X-X) and adapted to be fastened around the neck;
• an end wall (10) closing off one of the longitudinal ends of the skirt and extending substantially perpendicularly to the axis;
• a substantially annular sealing lip (16) centered on the axis and extending inside the skirt from the inside face (10A) of the end wall; and
• a projecting piece in relief (22) that interconnects the inside face (10A) of the end wall (10) and the inside face (16B) of a peripheral portion (16₁) of the lip (16), and that is adapted to transmit to the lip movement of the end wall (10) relative to the skirt (12), so that said portion (16₁) of the lip is moved radially towards the axis (X-X) when the pressure inside the skirt is greater than a predetermined threshold value;
said stopper being **characterized in that** the projecting piece in relief (22) occupies the entire space defined jointly by the inside face (10A) of the end wall (10), by the inside face (16B) of said portion (16₁) of the lip (16) and by a plane (P) that passes through said lip portion and that intersects the inside face of the end wall along a straight line (L) forming a chord of a circle centered on the axis (X-X).

2. A stopper according to claim 1, **characterized in that**, in a longitudinal section plane of the skirt (12) perpendicular to said straight line (L), said plane (P) and the axis (X-X) form an angle (γ) lying in the range 30° to 60°.

3. A stopper according to claim 2, **characterized in that** said angle (γ) is equal to approximately 45°.

4. A stopper according to any preceding claim, **characterized in that** said portion (16₁) of the lip (16) extends through more than 30° about the axis (X-X).

5. A stopper according to claim 4, **characterized in that** said portion (16₁) of the lip (16) extends through approximately 80° about the axis (X-X).

6. A stopper according to any preceding claim, **characterized in that**, over the entire periphery of its outside face (16A), the lip (16) defines a convex surface (18) that is adapted to bear in leaktight manner against the container neck (2), and **in that** the maximum axial distance (d₂₀) between the inside face (10A) of the end wall (10) and the line (M) of intersection between said plane (P) and the inside face (16B) of said portion (16₁) of the lip (16) is greater than the axial distance (d₁₈) between the inside face (10A) of the end wall (10) and the end of the convex surface (18) that faces towards the end wall.

7. A stopper according to any preceding claim, **characterized in that**, over the entire periphery of its outside face (16A), the lip (16) defines a convex surface (18) that includes a peripheral crest line (18A) situated radially further away from the axis (X-X) than the reminder of the convex surface, and that is adapted to bear in leaktight manner against the container neck (2) along said crest line, and **in that** the maximum axial distance (d₂₀) between the inside face (10A)) of the end wall (10) and the line (M) of intersection between said plane (P) and the inside face (16B) of said portion (16₁) of the lip (16), is less than the axial distance (d_{18A}) between the inside face (10A) of the end wall (10) and the crest line (18A).

8. A stopper according to any preceding claim, **characterized in that** the maximum axial distance (d₂₀) between the inside face (10A) of the end wall (10) and the line (M) of intersection between said plane (P) and the inside face (16B) of said portion (16₁) of the lip (16) is equal to about one half of the axial dimension of the lip (16).

9. A machine (30) for molding a plastics material for fabricating a stopper (1) for a container neck (2), said machine including a hollow mold (32), centered on an axis (Y-Y), and two coaxial tubular cores (34, 36) disposed one inside the other and arranged coaxially inside the mold in a manner such as to define a volume (V) for receiving the plastics material, said volume including:
• a first sub-volume (V₁) defined radially between an inside side face (32A) of the mold (32) and an outside side face (34A) of the outer core (34), said first sub-volume being adapted to mold a skirt (12) of the stopper (1), which skirt is substantially tubular, is centered on the axis, and is adapted to be fastened around a container neck (2);
• a second sub-volume (V₂) defined axially between an inside axial face (32B) of the mold (32) and respective axial faces (34B, 36A) of the outer core (34) and of the inner core (36), said second sub-volume being adapted to mold an end wall (10) of the stopper that closes off one of the longitudinal ends of the skirt (12) and that extends substantially perpendicularly to the axis;
• a third sub-volume (V₃) defined radially between an inside side face (34C) of the outer core (34) and an outside side face (36B) of the inner core (36), said third sub-volume being adapted to mold an annular sealing lip (16) of the stopper, which lip is centered on the axis and extends inside said skirt from the inside face (10A) of the end wall (10);
said machine being **characterized in that** the volume for receiving the plastics material further includes a fourth sub-volume (V₄) occupying the entire space defined between the second sub-volume (V₂) and not including that sub-volume, a peripheral portion of the third sub-volume (V₃) and not including that portion, and a bevel (38) that interconnects the axial face (36A) and the outside side face (36B) of the inner core (36), and that lies in a plane that intersects said axial face along a straight line forming a chord of a circle centered on the axis (Y-Y), said fourth sub-volume being adapted to mold a projecting piece in relief (22) of the stopper (1).

10. A machine according to claim 9, **characterized in that** the inner core (36) comprises a main molding body (36₁) and an unmolding pusher (36₂) arranged to move along the axis (Y-Y) inside the main body, the bevel (38) including two surfaces (38₁, 38₂) defined respectively by the main body and by the pusher.

## Patentansprüche

1. Verschluss (1) für einen Behälterhals (2), umfassend:
- eine im Wesentlichen röhrenförmige Manschette (12), die auf einer Längsachse (X-X) zentriert und dazu vorgesehen ist, um den Hals befestigt zu werden,
- eine Bodenwand (10), die eines der Längsenden der Manschette verschließt und sich im Wesentlichen senkrecht zur Achse erstreckt,
- eine im Wesentlichen ringförmige Dichtlippe (16), die auf der Achse zentriert ist und sich im Inneren der Manschette von der Innenseite (10A) der Bodenwand aus erstreckt, und
- ein vorspringendes Relief (22), das die Innenseite (10A) der Bodenwand (10) und die Innenseite (16B) eines Umfangsabschnitts (16₁) der Dichtlippe (16) verbindet und geeignet ist, auf die Dichtlippe eine Bewegung der Bodenwand (10) in Bezug zur Manschette (12) zu übertragen, so dass der Abschnitt (16₁) der Dichtlippe radial zur Achse (X-X) verschoben wird, wenn der Druck im Inneren der Manschette höher als ein vorbestimmter Schwellenwert ist,
**dadurch gekennzeichnet, dass** das vorspringende Relief (22) den gesamten Raum einnimmt, der gemeinsam von der Innenfläche (10A) der Bodenwand (10), der Innenfläche (16B) des Abschnitts (16₁) der Dichtlippe (16) und von einer geometrischen Ebene (P) begrenzt ist, die durch den Abschnitt der Dicklippe verläuft und die Innenfläche der Bodenwand entlang einer geraden Linie (L) orthogonal zur Achse (X-X) schneidet.

2. Verschluss nach Anspruch 1, **dadurch gekennzeichnet, dass** in einer Längsschnittebene der Manschette (12) senkrecht auf die gerade Linie (L) die geometrische Ebene (P) und die Achse (X-X) einen Winkel (γ) zwischen 30 und 60° bilden.

3. Verschluss nach Anspruch 2, **dadurch gekennzeichnet, dass** der Winkel (γ) ungefähr gleich 45° ist.

4. Verschluss nach einem der vorhergehenden Ansprüche, **dadurch gekennzeichnet, dass** der Abschnitt (16₁) der Dichtlippe (16) auf mehr als 30° um die Achse (X-X) läuft.

5. Verschluss nach Anspruch 4, **dadurch gekennzeichnet, dass** der Abschnitt (16₁) der Dichtlippe (16) auf ungefähr 80° um die Achse (X-X) läuft.

6. Verschluss nach einem der vorhergehenden Ansprüche, **dadurch gekennzeichnet, dass** die Dichtlippe (16) auf der gesamten Peripherie ihrer Außenseite (16A) eine konvexe Fläche (18) begrenzt, die geeignet ist, sich dicht an den Behälterhals (2) anzulegen,
und dass der maximale Axialabstand (d₂₀) zwischen der Innenseite (10A) der Bodenwand (10) und der Schnittlinie (M) zwischen der geometrischen Ebene (P) und der Innenseite (16B) des Abschnitts (16₁) der Dichtlippe (16) größer als der Axialabstand (d₁₈) zwischen der Innenseite (10A) der Bodenwand (10) und dem Ende der konvexen Fläche (18), das zur Bodenwand gewandt ist, ist.

7. Verschluss nach einem der vorhergehenden Ansprüche, **dadurch gekennzeichnet, dass** die Dichtlippe (16) auf der gesamten Peripherie ihrer Außenfläche (16A) eine konvexe Fläche (18) begrenzt, die eine Umfangsscheitellinie (18A) einschließt, die sich radial weiter von der Achse (X-X) entfernt befindet als die übrige konvexe Fläche, und die geeignet ist, sich dicht an den Behälterhals (2) entlang dieser Scheitellinie anzulegen,
und dass der maximale Axialabstand (d₂₀) zwischen der Innenfläche (10A) der Bodenwand (10) und der Schnittlinie (M) zwischen der geometrischen Ebene (P) und der Innenseite (16B) des Abschnitts (16₁) der Dichtlippe (16) kleiner als der Axialabstand (d_{18A}) zwischen der Innenfläche (10A) der Bodenwand (10) und der Scheitellinie (18A) ist.

8. Verschluss nach einem der vorhergehenden Ansprüche, **dadurch gekennzeichnet, dass** der maximale Axialabstand (d₂₀) zwischen der Innenfläche (10A) der Bodenwand (10) und der Schnittlinie (M) zwischen der geometrischen Ebene (P) und der Innenfläche (16B) des Abschnitts (16₁) der Dichtlippe (16) ungefähr gleich der Hälfte der Axialabmessung der Dichtlippe (16) ist.

9. Maschine (30) zum Formen eines Kunststoffes zur Herstellung eines Verschlusses (1) für einen Behälterhals (2), umfassend eine Hohlform (32), die auf einer Achse (Y-Y) zentriert ist, und zwei koaxiale röhrenförmige Kerne (34, 36), die ineinander angeordnet und koaxial im Inneren der Form vorgesehen sind, um ein Volumen (V) zur Aufnahme des Kunststoffes zu begrenzen, wobei dieses Volumen umfasst:
- ein erstes Untervolumen (V₁), das radial zwischen einer inneren Seitenfläche (32A) der Form (32) und einer äußeren Seitenfläche (34A) des äußeren Kerns (34) begrenzt ist, wobei dieses erste Untervolumen dazu geeignet ist, eine Manschette (12) des Verschlusses (1) zu formen, die im Wesentlichen röhrenförmig und auf der Achse zentriert ist und dazu geeignet ist, um einen Behälterhals (2) befestigt zu werden,
- ein zweites Untervolumen (V₂), das axial zwischen einer inneren Axialfläche (32B) der Form (32) und jeweiligen Axialflächen (34B, 36A) des äußeren (34) bzw. inneren (36) Kerns begrenzt ist, wobei dieses zweite Untervolumen dazu geeignet ist, eine Bodenwand (10) des Verschlusses zu formen, die eines der Längsenden der Manschette (12) verschließt und sich im Wesentlichen senkrecht auf die Achse erstreckt,
- ein drittes Untervolumen (V₃), das radial zwischen einer inneren Seitenfläche (34C) des äußeren Kerns (34) und einer äußeren Seitenfläche (36B) des inneren Kerns (36) begrenzt ist, wobei dieses dritte Untervolumen dazu geeignet ist, eine ringförmige Dichtlippe (16) des Verschlusses zu formen, die auf der Achse zentriert ist und sich im Inneren dieser Manschette von der Innenseite (10A) der Bodenwand (10) aus erstreckt,
**dadurch gekennzeichnet, dass** das Volumen (V) zur Aufnahme des Kunststoffes ferner ein viertes Untervolumen (V₄) einschließt, das den gesamten Raum einnimmt, der zwischen dem nicht eingeschlossenen zweiten Untervolumen (V₂), einem nicht eingeschlossenen Umfangsabschnitt des dritten Untervolumens (V₃) und einer geschnittenen Ebene (38) begrenzt ist, die die Axialfläche (36A) und die äußere Seitenfläche (36B) des inneren Kerns (36) verbindet und einer geometrischen Ebene angehört, die diese Axialfläche entlang einer geraden Linie orthogonal zur Achse (Y-Y) schneidet, wobei dieses vierte Untervolumen dazu geeignet ist, ein vorspringendes Relief (22) des Verschlusses (1) zu formen.

10. Maschine nach Anspruch 9, **dadurch gekennzeichnet, dass** der innere Kern (36) einen Hauptformkörper (36₁) und einen Entformungsschieber (36₂) umfasst, der beweglich entlang der Achse (Y-Y) im Inneren des Hauptkörpers angeordnet ist, wobei die geschnittene Ebene (38) zwei Flächen (38₁, 38₂) einschließt, die von diesem Hauptkörper bzw. diesem Schieber begrenzt sind.
